# EUROPEAN PATENT APPLICATION

(11) **EP 0 638 752 A1**
(43) Date of publication of application: **15.02.1995**
(21) Application number: 93310636.1
(22) Date of filing: 31.12.1993
(51) Int. Cl.: F16L 19/065

(54) **Pipe connector**

(30) Priority: 11.08.1993 KR 9315545; 02.12.1993 KR 9326391; 02.12.1993 KR 9326392
(71) Applicant: Park, Sil-Sang, Kimhae-gun, Kyongsangnam-do (KR)
(72) Inventor: Park, Sil-Sang, Kimhae-gun, Kyongsangnam-do (KR)
(74) Representative: Woodward, John Calvin

(57) **Abstract**

A pipe connector capable of tightly coupling pipes at opposite ends thereof. The pipe connector includes a nipple (100) including a first pipe member (30) and a second pipe member (40) adapted to receive one end of a pipe (110) to be coupled to the nipple (100), a clamp member (120) adapted to be threadedly coupled to the second pipe member (40), an inner pipe portion (40b) formed radially inwardly of the second pipe member (40) to extend in a longitudinal direction of the second pipe member (40), an annular space defined between the second pipe member (40) and the inner pipe portion and adapted to receive the one end of the pipe (110), a spacer (40d) extending from an outer end of the second pipe member (40) in a longitudinal direction of the second pipe member (40), the spacer (40d) being adapted to be pressed against an outer surface of the pipe (110) toward a center line of the pipe by the inclined surface (120c) of the clamp member (120) when the clamp member (120) is fastened under a condition that the one end of the pipe (110) has been received in the annular space, whereby the pipe is partially depressed by the spacer (40d), and an annular groove (40c) formed on an outer surface of the inner pipe portion and adapted to receive the depressed portion of the pipe (110).

## Description

### BACKGROUND OF THE INVENTION

### Field of the Invention

The present invention relates to a pipe connector, and more particularly to a pipe connector capable of tightly coupling pipes at opposite ends thereof.

### Description of the Prior Art

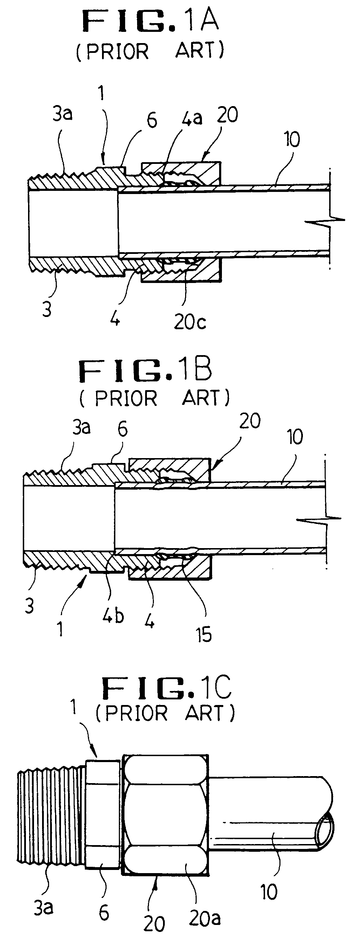

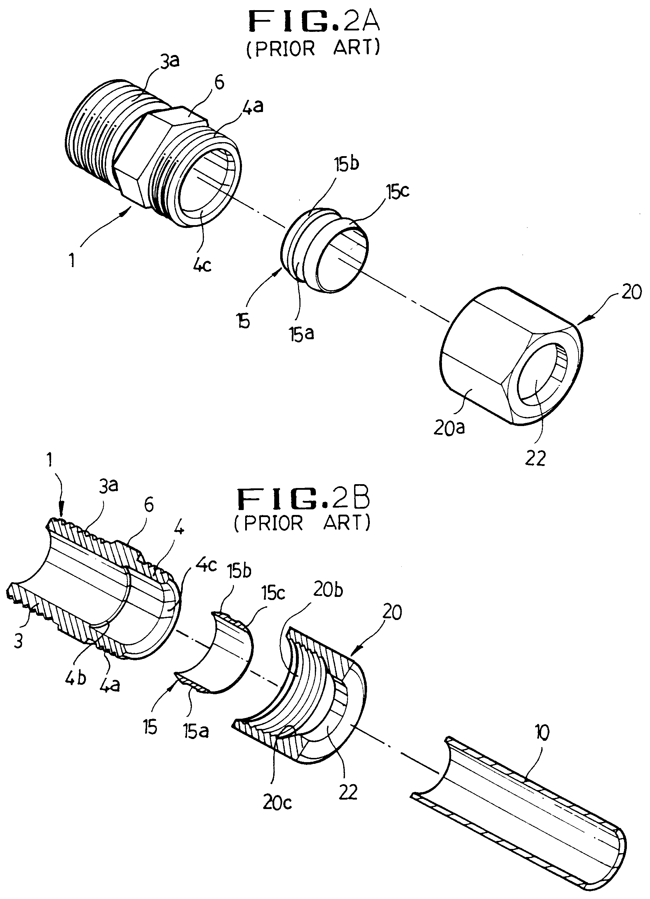

Conventionally, there have been known a variety of pipe connectors. An example of such conventional pipe connectors is illustrated in FIGS. 1A to 2B. The pipe connector shown in FIGS. 1A to 2B comprises a nipple 1 having a first pipe member 3 formed with a threaded portion 3a on the outer surface thereof and a second pipe member 4 formed with a threaded portion 4a on the outer surface thereof. The first and second pipe members 3 and 4 are integral with each other and adapted to fit pipes therein, respectively. Between the first and second pipe members 3 and 4, a hexagonal surface 6 is formed which is adapted to be engaged with a pipe wrench or a spanner upon coupling pipes. The second pipe member 4 has at inner end thereof a flange 4b formed on the inner surface of the second pipe member 4. When a pipe is fitted in the second pipe member 4, the end of the pipe received in the second pipe member 4 comes into contact with the flange 4b. As shown in FIGS. 2A and 2B, an inclined surface 4c having a truncated cone shape is provided at the inner surface of the second pipe member 4. The inclined surface 4c is positioned at the outer end of the second pipe member 4. The pipe connector further comprises a press ring 15 having an annular groove 15a formed at the central portion of the press ring 15. On both sides of the annular groove 15, the press ring 15 has a pair of taper portions 15b and 15c each having an inclined surface. The pipe connector further comprises a clamp member 20 threadedly coupled to the nipple 1 . The clamp member 20 has a hexagonal surface 20a formed on the outer surface of the clamp member 20 and adapted to be engaged with a pipe wrench or a spanner upon coupling pipes. The clamp member 20 also has at inner surface thereof a threaded portion 20b adapted to be threadedly engaged with the threaded portion 4a of the second pipe member 4, as shown in FIG. 2B. The clamp member 20 further includes an inclined surface 20c and a through hole 22 which are formed inwardly of the inner end of the threaded portion 20b. Where a pipe 10 is fitted in the second pipe member 4 of the nipple 1 through the through hole 22 of clamp member 20, the inclined surface 20c of the clamp member 20 comes into contact with the taper portion 15b of the press ring 15 and presses the taper portion 15b against the outer surface of the pipe 10 toward the center line of the pipe 10, thereby enabling the pipe 10 to be tightly coupled to the nipple 1.

For coupling the pipe 10 made of copper to the pipe connector having the above-mentioned construction, the pipe 10 is inserted first through the through hole 22 of the clamping member 20. Thereafter, the press ring 15 is fitted around the pipe 10. Under the condition, the pipe 10 is inserted into the nipple 1 until its inner end comes into contact with the flange 4b of the second pipe member 4. Then, the press ring 15 is moved toward the second pipe member 4 such that the taper portion 15b of the press ring 15 comes into contact with the inclined surface 4c of the second pipe member 4. The threaded portion 20b of the clamp member 20 is then threadedly coupled to the threaded portion 4a of the second pipe member 4 by rotating a pipe wrench or spanner engaged with the hexagonal surface 20a of the clamp member 20, as shown in FIG. 1A. As the clamp member 20 is tightened, the taper portion 15b of press ring 15 is pressed against the inclined surface 4c of the second pipe member 4 while the taper portion 15c of press ring 15 is pressed against the inclined surface 20c of the clamp member 20. As a result, the press ring 15 presses radially the pipe 10, so that the pipe 10 is partially depressed toward the centerline of the pipe 10, as shown in FIG. 1B. Thus the press ring 15 can be in tight contact with the outer surface of pipe 10.

Although the pipe connector having the above-mentioned construction achieves a tight coupling of the copper pipe 10 by the threaded coupling between the nipple 1 and the clamp member 20 via the press ring 15, it has a complex construction including a number of elements such as the nipple 1, the press ring 15 and the clamp member 20. Furthermore, this pipe connector has a disadvantage that it is useless when the press ring 15 has disappeared.

Such a pipe connector is on the market under a condition that the press ring 15 has been fitted between the second pipe member 4 of nipple 1 and the clamp member 20 threadedly coupled to the threaded portion 4a of the second pipe member 4. For connecting pipes by use of such a pipe connector, the clamp member 20 should be released from the second pipe member 4 of nipple 1 so that the pipe connector can be exploded, as shown in FIG. 2B. Then, the clamp member 20 and the press ring 15 are fitted around an outer surface portion of the pipe 10 to be coupled, by inserting the pipe 10 through the through hole 22 of clamp member 20.

Subsequently, the pipe 10 is moved into the second pipe member 4 of nipple 1 until the inner end or coupling end of pipe 10 comes into contact with the flange 4b of the second pipe member 4, as shown in FIGS. 1A and 1B. Thereafter, a threading work is performed for threadedly coupling the clamp member 20 to the threaded portion 4a of the second pipe member 4. Consequently, the conventional pipe connector has a disadvantage of requiring a number of assembling steps.

### SUMMARY OF THE INVENTION

Therefore, the present invention has been made in view of the above-mentioned disadvantages encountered in the prior art and, thus, an object of the invention is to provide a pipe connector having a simple and inexpensive construction capable of achieving a convenience in coupling and an improvement in quality as well as requiring no disassembling work.

In accordance with one aspect, the present invention provides a pipe connector comprising: a nipple including a first pipe member having an outer surface formed with a threaded portion and a second pipe member having an outer surface formed with a threaded portion, said second pipe member being adapted to receive one end of a pipe to be coupled to the nipple; a clamp member adapted to be threadedly coupled to the second pipe member, said clamp member having an inclined surface formed on an inner surface of the clamp member and a through hole for allowing the one end of the pipe to have access to the second pipe member; a flange formed on an inner surface of the second pipe member and adapted to come into contact with said one end of the pipe inserted through said through hole of the clamp member into said nipple; a spacer extending from an outer end of the second pipe member in a longitudinal direction of the second pipe member, said spacer being adapted to be pressed against an outer surface of the pipe toward a center line of the pipe by said inclined surface of the clamp member when the clamp member is fastened under a condition that the one end of the pipe received in the second pipe member has come into contact with said flange, whereby the pipe is partially depressed by the spacer; and an annular groove formed at a juncture between said outer end of the second pipe member and the spacer and adapted to cause the spacer to be easily bent toward the center line of the pipe when the spacer is pressed by the inclined surface of the clamp member.

In accordance with another aspect, the present invention provides a pipe connector comprising: a nipple including a first pipe member having an outer surface formed with a threaded portion and a second pipe member having an outer surface formed with a threaded portion, said second pipe member being adapted to receive one end of a pipe to be coupled to the nipple; a clamp member adapted to be threadedly coupled to the second pipe member, said clamp member having an inclined surface formed on an inner surface of the clamp member and a trough hole for allowing said one end of the pipe to have access to the second pipe member; an inner pipe member formed radially inwardly of the second pipe member to extend in a longitudinal direction of the second pipe member; an annular space defined between the second pipe member and the inner pipe member and adapted to receive the one end of the pipe; a spacer extending from an outer end of the second pipe member in a longitudinal direction of the second pipe member, said spacer being adapted to be pressed against an outer surface of the pipe toward a center line of the pipe by said inclined surface of the clamp member when the clamp member is fastened under a condition that the one end of the pipe has been received in said annular space, whereby the pipe is partially depressed by the spacer; a first annular groove formed at a juncture between said outer end of the second pipe member and the spacer and adapted to cause the spacer to be easily bent toward the center line of the pipe when the spacer is pressed by the inclined surface of the clamp member; and a second annular groove formed on an outer surface of the inner pipe member and adapted to receive said depressed portion of the pipe.

### BRIEF DESCRIPTION OF THE DRAWINGS

Other objects and aspects of the invention will become apparent from the following description of embodiments with reference to the accompanying drawings in which:
FIG. 1A is a sectional view of a conventional pipe connector, showing coupling of a pipe to the pipe connector;
FIG. 1B is a sectional view of the conventional pipe connector, showing a completely coupled condition of the pipe to the pipe connector;
FIG. 1C is a front view of the conventional pipe connector, showing the completely coupled condition of the pipe to the pipe connector;
FIG. 2A is an exploded perspective view of the conventional pipe connector;
FIG. 2B is a broken, exploded perspective view of the conventional pipe connector of FIG. 2A;
FIG. 3 is an exploded perspective view of a pipe connector in accordance with a first embodiment of the present invention, showing coupling of a pipe to the pipe connector;
FIG. 4 is a sectional view of the pipe connector in accordance with the first embodiment of the present invention, showing a completely coupled condition of the pipe to the pipe connector;
FIG. 5 is an enlarged sectional view of a portion A of FIG. 4;
FIG. 6 is a sectional view of a pipe connector in accordance with a second embodiment of the present invention, showing a completely coupled condition of the pipe to the pipe connector;
FIG. 7 is an enlarged sectional view of a portion B of FIG. 6;
FIG. 8 is a sectional view of a pipe connector in accordance with a third embodiment of the present invention, showing a completely coupled condition of the pipe to the pipe connector;
FIG. 9 is an enlarged sectional view of a portion C of FIG. 8;
FIG. 10 is an exploded perspective view of a pipe connector in accordance with a fourth embodiment of the present invention, showing coupling of a pipe to the pipe connector;
FIG. 11 is a sectional view of the pipe connector in accordance with the fourth embodiment of the present invention, showing a completely coupled condition of the pipe to the pipe connector;
FIG. 12 is an enlarged sectional view of a portion D of FIG. 11;
FIG. 13 is a sectional view of a pipe connector in accordance with a fifth embodiment of the present invention, showing a completely coupled condition of the pipe to the pipe connector;
FIG. 14 is an enlarged sectional view of a portion E of FIG. 13;
FIG. 15 is an exploded perspective view of a pipe connector in accordance with a sixth embodiment of the present invention;
FIG. 16 is a sectional view of the pipe connector in accordance with the sixth embodiment of the present invention, showing coupling of a pipe to the pipe connector;
FIG. 17 is a sectional view of the pipe connector in accordance with the sixth embodiment of the present invention, showing a completely coupled condition of the pipe to the pipe connector;
FIG. 18 is an exploded perspective view of a pipe connector in accordance with a seventh embodiment of the present invention, showing coupling of a pipe to the pipe connector;
FIG. 19 is a sectional view of the pipe connector in accordance with the seventh embodiment of the present invention, showing a completely coupled condition of the pipe to the pipe connector;
FIG. 20 is an enlarged sectional view of a portion F of FIG. 19;
FIG. 21 is a sectional view of a pipe connector in accordance with an eighth embodiment of the present invention, showing a completely coupled condition of the pipe to the pipe connector;
FIG. 22 is an enlarged sectional view of a portion G of FIG. 21;
FIG. 23 is a sectional view of a pipe connector in accordance with a ninth embodiment of the present invention, showing a completely coupled condition of the pipe to the pipe connector;
FIG. 24 is an enlarged sectional view of a portion H of FIG. 23;
FIG. 25 is a sectional view of a pipe connector in accordance with a tenth embodiment of the present invention, showing a completely coupled condition of the pipe to the pipe connector; and
FIG. 26 is an enlarged sectional view of a portion I of FIG. 25.

### DETAILED DESCRIPTION OF THE PREFERRED EMBODIMENTS

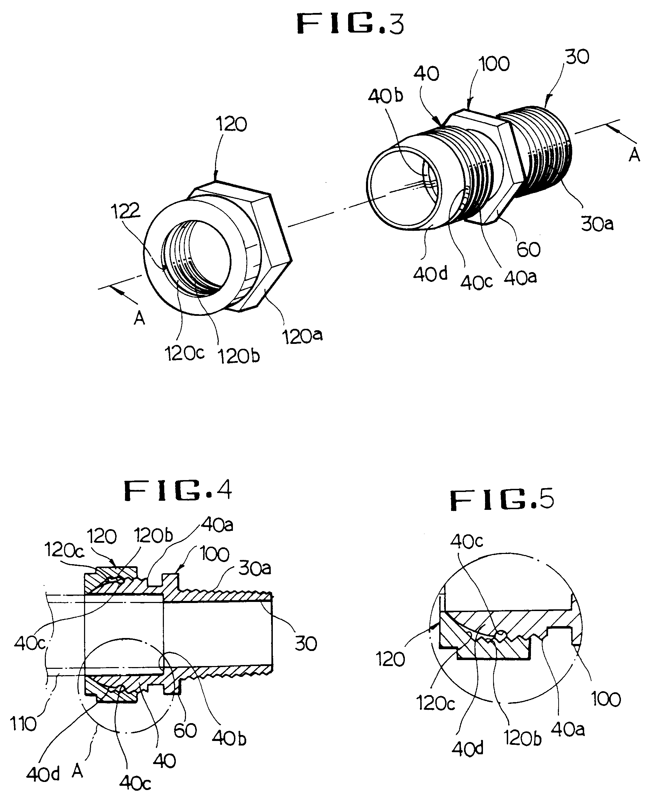

Referring to FIGS. 3 to 5, there is illustrated a pipe connector in accordance with a first embodiment of the present invention.

As shown in FIGS. 3 to 5, the pipe connector comprises a nipple 100 and a clamp member 120.

The nipple 100 includes a first pipe member 30 formed with a threaded portion 30a on the outer surface thereof and a second pipe member 40 formed with a threaded portion 40a on the outer surface thereof. The first and second pipe members 30 and 40 are integral with each other and adapted to fit pipes therein, respectively. Between the first and second pipe members 30 and 40, a hexagonal surface 60 is formed which is adapted to be engaged with a pipe wrench or a spanner upon coupling pipes. As shown in FIG. 4, the second pipe member 40 has at inner end thereof a flange 40b formed on the inner surface of the second pipe member 40. When a pipe 110 is fitted in the second pipe member 40, the end of the pipe 110 received in the second pipe member 40 comes into contact with the flange 40b. Outwardly of the threaded portion 40a, the second pipe member 40 also has an annular groove 40c and a spacer portion 40d. The spacer portion 40d integrally formed at the outer end of the second pipe member 40 has a taper shape having a thickness gradually reducing toward the outer end of the second pipe member 40 to form an inclined surface.

The clamp member 120 has at the middle portion thereof a hexagonal surface 120a formed on the outer surface of the clamp member 120 and adapted to be engaged with a pipe wrench or a spanner upon coupling pipes. The clamp member 120 also has at inner surface thereof a threaded portion 120b adapted to be threadedly engaged with the threaded portion 40a of the second pipe member 40. The clamp member 120 further includes an inclined surface 120c formed inwardly of the inner end of the threaded portion 120b. When the pipe 110 is fitted in the second pipe member 40 of the nipple 100, the inclined surface 120c of the clamp member 120 comes into contact with the inclined surface of spacer portion 40d of the second pipe member 40 and presses the spacer portion 40d against the outer surface of the pipe 110 toward the center line of the pipe 110, thereby enabling the pipe 110 to be tightly coupled to the nipple 100. The clamp member 120 also has a through hole 122 formed adjacent to the inclined surface 120c and adapted to allow the pipe 110 to have access to the clamp member 120.

For coupling the pipe 110 to the pipe connector having the above-mentioned construction, the pipe 110 is inserted first through the throughout hole 122 of the clamping member 120 into the nipple 100 until its inner end comes into contact with the flange 40b of the second pipe member 40. Under the condition, the clamp member 120 is fastened to the second pipe member 4 such that its threaded portion 120b is threadedly coupled to the threaded portion 40a of the second pipe member 40. As the clamp member 120 is tightened, the inclined surface of spacer portion 40d of the second pipe member 40 is pressed by the inclined surface 120c of clamp member 120, so that it can press the outer surface of the pipe 110 toward the center line of the pipe 110. At this time, the annular groove 40c formed between the threaded portion 40a and the spacer portion 40d of the second pipe member 40 serves to makes it easy for the pipe 110 to be in tight contact with the spacer portion 40d.

Prior to the use, the pipe connector in accordance with the first embodiment of the present invention is maintained under a condition that the clamp member 120 has been threadedly coupled to the nipple 100. For connecting the pipe 110 by use of this pipe connector, the clamp member 120 is slightly loosened without being completely separated from the nipple 100. Under this condition, the pipe 110 is inserted through the through hole 122 of the clamping member 120 into the nipple 100 until its inner end comes into contact with the flange 40b of the second pipe member 40.

Thereafter, the clamp member 120 is fastened to the nipple 100. As the clamp member 120 is tightened, the spacer portion 40d of the second pipe member 40 is pressed against the pipe 110 by the inclined surface 120c of clamp member 120, so that it can press the outer surface of the pipe 110 toward the center line of the pipe 110, as shown in FIG. 4. As a result, the pipe 110 can be tightly coupled to the nipple 100 without causing any leakage of a gas or liquid flowing through the pipe 110.

Since the annular groove 40c is formed on the outer surface of the second pipe member 40 between the threaded portion 40a and the spacer portion 40d of the second pipe member 40, the spacer portion 40d is easily bent by virtue of the annular groove 40c when it is pressed by the inclined surface 120c of the clamp member 120. By this deformation, the spacer portion 40d can be in tight contact with the outer surface of pipe 110.

The pipe connector of the first embodiment is simple in construction in that the spacer portion integrally formed with the second pipe member of nipple together with the annular. This pipe connector has a convenience in assembling and disassembling works because the coupling of a pipe is achieved by inserting the pipe through the through hole of the clamp member under a condition that the clamp member has been temporarily coupled to the nipple, and rotating the clamp member by a spanner or a pipe wrench under a condition that the inner end of the pipe is in contact with the flange of the second pipe member of nipple.

As mentioned above, the annular groove 40c is formed on the outer surface of the second pipe member 40 between the threaded portion 40a and the spacer portion 40d of the second pipe member 40, the spacer portion 40d is easily bent by virtue of the annular groove 40c when it is pressed by the inclined surface 120c of the clamp member 120. By this deformation, the spacer portion 40d can be in tight contact with the outer surface of pipe 110. Accordingly, an easy and tight coupling of the pipe to the pipe connector can be achieved. In particular, the manufacture cost of the pipe connector can be reduced by virtue of the simple construction. This simple construction also provides an improvement in quality.

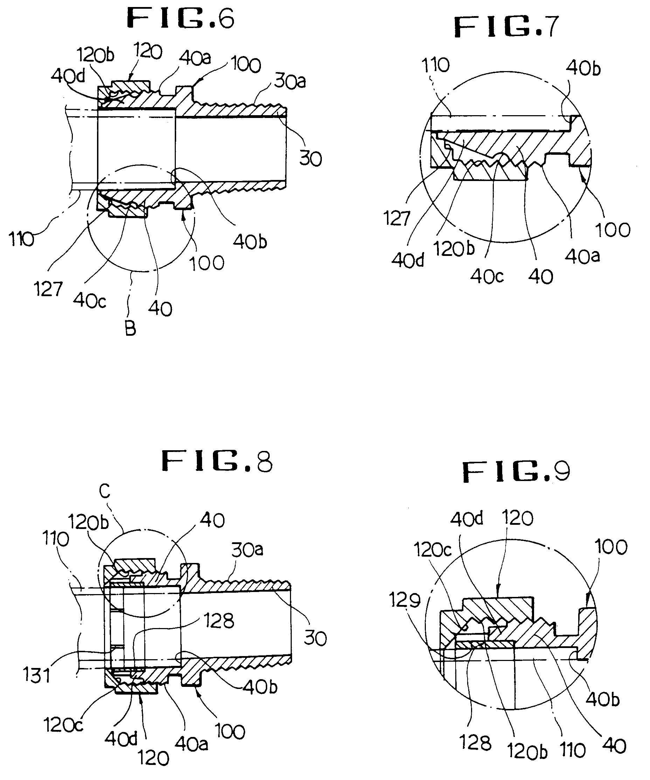

Referring to FIGS. 6 and 7, there is illustrated a pipe connector in accordance with a second embodiment of the present invention. In FIGS. 6 and 7, elements corresponding to those of the first embodiment are denoted by the same reference numerals and, thus, their detailed description will be omitted.

The pipe connector of the second embodiment shown in FIGS. 6 and 7 has a construction similar to that of the first embodiment shown in FIGS. 3 to 5, except that a step 127 is formed on the inner surface of the clamp member 120, in place of the inclined surface 120c.

For coupling the pipe 110 to the pipe connector having the above-mentioned construction including the step 127 formed on the inner surface of the clamp member 120, the clamp member 120 and the second pipe member 40 of nipple 100 are threadedly coupled to each other under a condition the inner end of the pipe 110 is in contact with the flange 40b of second pipe member 40 of the nipple 100. As the clamp member 120 is fastened, the step 127 serves to more greatly press the spacer portion 40d of the second pipe member 40 against the outer surface of pipe 110 toward the center line of the pipe 110. As a result, the pipe 110 can be in tight contact with the inner surface of the second pipe member 40.

Referring to FIGS. 8 and 9, there is illustrated a pipe connector in accordance with a third embodiment of the present invention. In FIGS. 8 and 9, elements corresponding to those of the first embodiment are denoted by the same reference numerals and, thus, their detailed description will be omitted.

The pipe connector of the third embodiment shown in FIGS. 8 and 9 has a construction similar to that of the first embodiment shown in FIGS. 3 to 5, except that it includes a packing receiving channel 129 formed on the inner surface of the second pipe member 40 arid adapted to receive a packing member 128 made of natural rubber, teflon or synthetic rubber, and a plurality of uniformly spaced slits 131 provided at the spacer portion 40d formed at the outer end of the second pipe member 40.

For coupling the pipe 110 to the pipe connector having the above-mentioned construction, the clamp member 120 is threadedly coupled to the second pipe member 40 of nipple 100 under a condition the inner end of the pipe 110 is in contact with the flange 40b of second pipe member 40 of the nipple 100, after the packing member 128 has been inserted into the packing receiving channel 129 formed on the inner surface of the second pipe member 40. As the clamp member 120 is tightened, the spacer portion 40d integrally formed at the outer end of the second pipe member 40 is pressed toward the center line of the pipe 110 by the inclined surface 120c of the clamp member 120, so that the packing member 128 can be in tight contact with the outer surface of pipe 110. Since the spacer portion 40d has a plurality of uniformly spaced slits 131 extending in the longitudinal direction of the nipple 100, the pipe 110 and the packing member 128 can be more in tight contact with each other. As a result, the pipe 110 can be tightly coupled to the nipple 100 without causing any leakage of a gas or liquid flowing through the pipe 110.

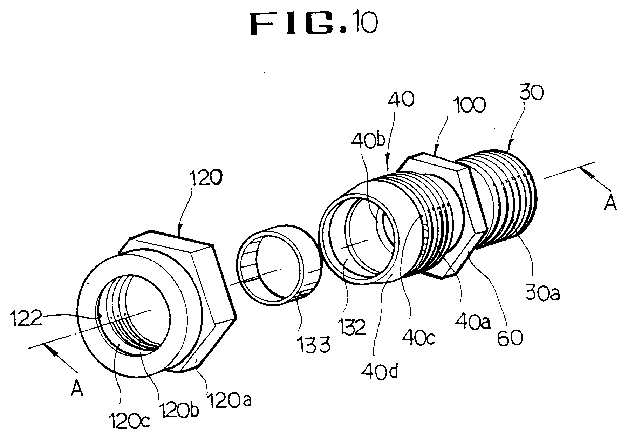

Referring to FIGS. 10 to 12, there is illustrated a pipe connector in accordance with a fourth embodiment of the present invention. In FIGS. 10 to 12, elements corresponding to those of the first embodiment are denoted by the same reference numerals and, thus, their detailed description will be omitted.

The pipe connector of the fourth embodiment shown in FIGS. 10 to 12 has a construction similar to that of the first embodiment shown in FIGS. 3 to 5, except that it includes a packing receiving recess 132 integrally formed on the inner surface of the second pipe member 40 and adapted to receive a packing member 133 made of natural rubber, teflon or synthetic rubber.

For coupling the pipe 110 to the pipe connector having the above-mentioned construction, the clamp member 120 is threadedly coupled to the second pipe member 40 of nipple 100 under a condition the inner end of the pipe 110 is in contact with the flange 40b of second pipe member 40 of the nipple 100, after the packing member 133 has been inserted into the packing receiving recess 132 formed on the inner surface of the second pipe member 40. As the clamp member 120 is tightened, the spacer portion 40d integrally formed at the outer end of the second pipe member 40 together with the annular groove 40c is pressed toward the center line of the pipe 110 by the inclined surface 120c of the clamp member 120, so that the packing member 133 can be in tight contact with the outer surface of pipe 110. As a result, the pipe 110 can be tightly coupled to the nipple 100 without causing any leakage of a gas or liquid flowing through the pipe 110.

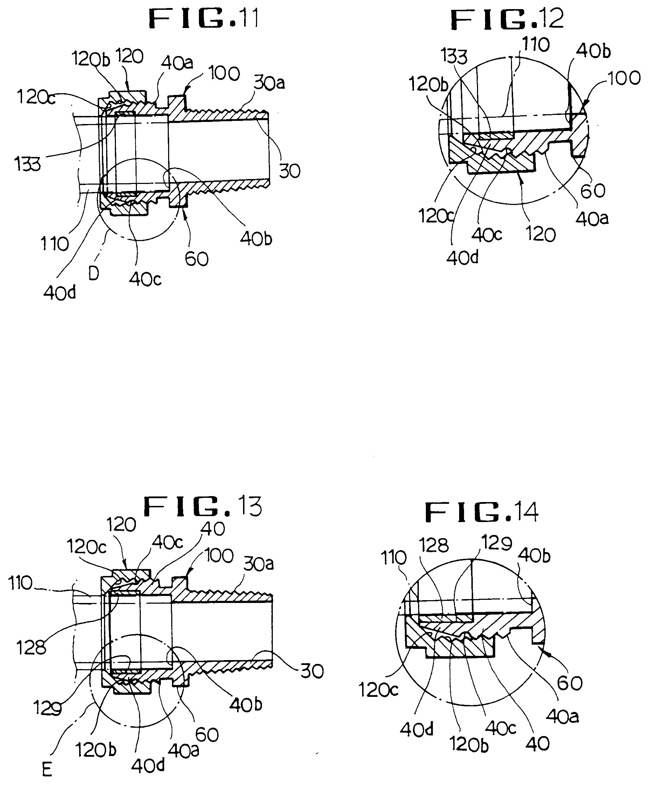

Referring to FIGS. 13 and 14, there is illustrated a pipe connector in accordance with a fifth embodiment of the present invention. In FIGS. 13 and 14, elements corresponding to those of the first embodiment are denoted by the same reference numerals and, thus, their detailed description will be omitted.

The pipe connector of the fifth embodiment shown in FIGS. 13 and 14 has a construction similar to that of the first embodiment shown in FIGS. 3 to 5, except that it includes a packing receiving channel 129 provided at the spacer portion 40d integrally formed on the inner surface of the second pipe member 40 and adapted to receive a packing member 128 made of natural rubber, teflon or synthetic rubber.

For coupling the pipe 110 to the pipe connector having the above-mentioned construction, the clamp member 120 is threadedly coupled to the second pipe member 40 of nipple 100 under a condition the inner end of the pipe 110 is in contact with the flange 40b of second pipe member 40 of the nipple 100, after the packing member 128 has been inserted into the packing receiving channel 129 formed on the inner surface of the second pipe member 40. As the clamp member 120 is tightened, the spacer portion 40d integrally formed at the outer end of the second pipe member 40 together with the annular groove 40c is pressed toward the center line of the pipe 110 by the inclined surface 120c of the clamp member 120, so that the packing member 128 can be in tight contact with the outer surface of pipe 110. As a result, the pipe 110 can be tightly coupled to the nipple 100 without causing any leakage of a gas or liquid flowing through the pipe 110.

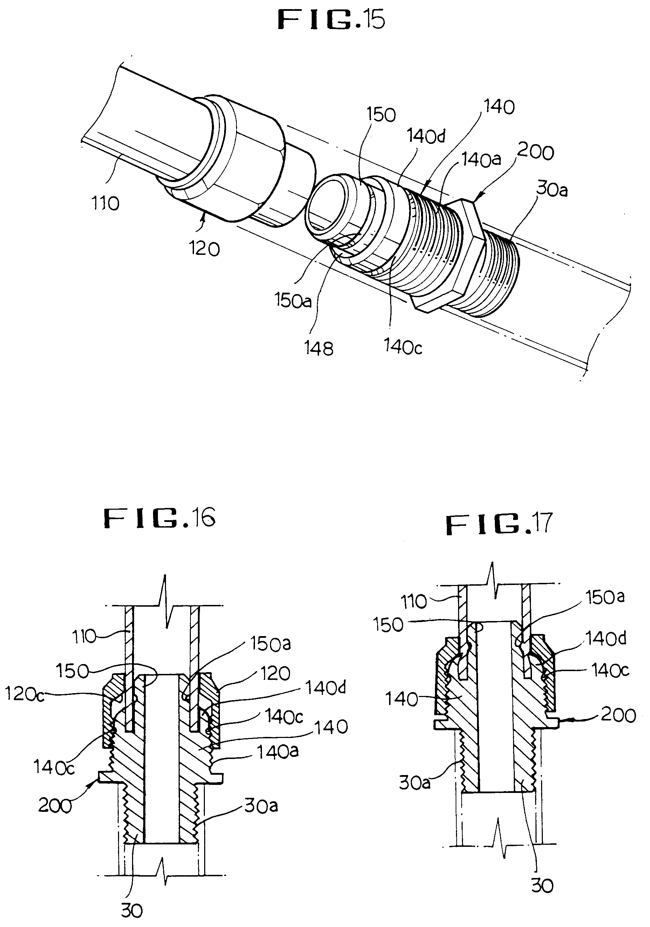

Referring to FIGS. 15 to 17, there is illustrated a pipe connector in accordance with a sixth embodiment of the present invention. In FIGS. 15 to 17, elements corresponding to those of the first embodiment are denoted by the same reference numerals and, thus, their detailed description will be omitted.

The pipe connector of the sixth embodiment shown in FIGS. 15 to 17 has a construction similar to that of the first embodiment shown in FIGS. 3 to 5, except that it comprises a nipple 200 including a second pipe member 140 having a different construction from that of the first embodiment. In accordance with the sixth embodiment, the second pipe member 140 has a threaded portion 140a similar to the threaded portion 40a, an annular groove 140c similar to the annular groove 40c, a spacer portion 140d similar to the spacer portion 40d, and an inner pipe portion 150 formed radially inwardly of the spacer portion 140d to extend in the longitudinal direction of the second pipe member 140 and adapted to fit the pipe 110 therearound, and an annular groove 150a formed on the outer surface of the inner pipe member 150. An annular space 148 is defined between the spacer portion 140d and the inner pipe portion 150 of the second pipe member 140. Together with the inner pipe portion 150, the annular space 148 serves to guide the insertion of the pipe 110 into the second pipe member 140. When the clamp member 120 is threadedly coupled to the second pipe member 140 under a condition that the pipe 110 has been fitted in the annular space 148 defined between the spacer portion 140d and the inner pipe portion 150, the pipe 110 is partially depressed by the pressing force of the spacer portion 140d of the second pipe member 140, so that the depressed portion can be embedded in the annular groove 150a. That is, the annular groove 150a serves to provide a more tight coupling between the nipple 200 and the pipe 110.

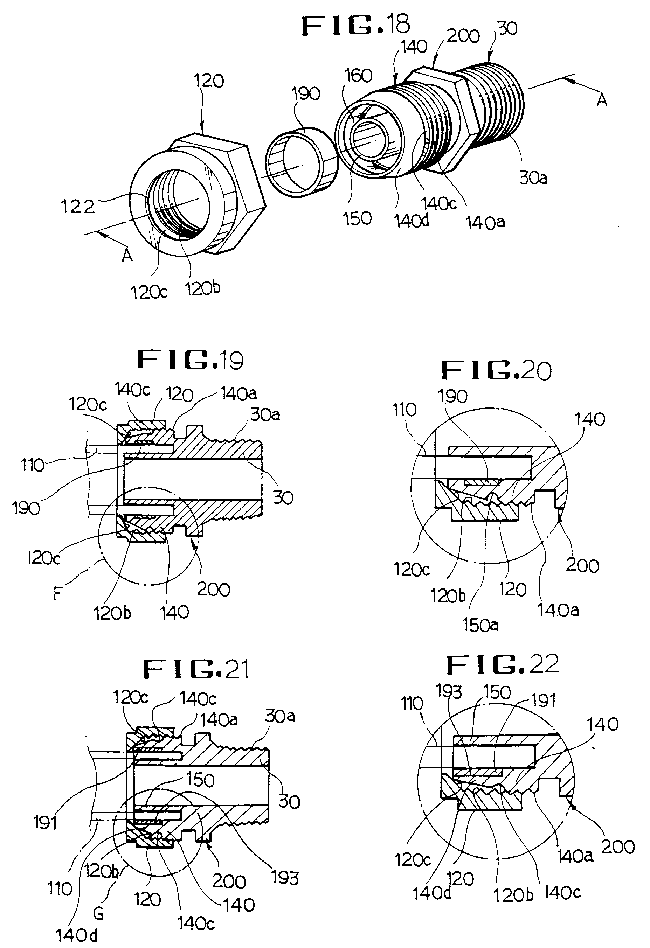

For coupling the pipe 110 to the pipe connector having the above-mentioned construction, the pipe 110 is inserted into the second pipe member 140 through the through hole of the clamp member 120 under a condition that the clamp member 120 is temporarily coupled to the nipple 200, so that the inner end of the pipe 110 can be received in the annular space 148, as shown in FIG. 16. As the clamp member 120 is tightened, as shown in FIG. 17, the inclined surface 120c of the clamp member 120 comes into contact with the spacer portion 140d formed at the outer end of the second pipe member 140 and gradually presses it against the pipe 110.

As a result, the pipe 110 is partially depressed at its inner surface by the pressing force of the spacer portion 140d of the second pipe member 140, so that the depressed portion can be embedded in the annular groove 150a. Thus the pipe 110 can be tightly engaged with the nipple 200.

This pipe connector of the sixth embodiment has a convenience in assembling and disassembling works because the pipe can be tightly coupled to the nipple by inserting the pipe through the through hole of the clamp member until the inner end of the pipe is received in the annular space defined between the spacer portion arid the inner pipe portion, and then simply fastening the clamp member. Moreover, the pipe connector has a simple construction over conventional pipe connectors. By virtue of such a simple construction, the manufacture cost of the pipe connector can be reduced. This simple construction also provides an improvement in quality.

Referring to FIGS. 18 to 20, there is illustrated a pipe connector in accordance with a seventh embodiment of the present invention. In FIGS. 18 to 20, elements corresponding to those of the sixth embodiment are denoted by the same reference numerals and, thus, their detailed description will be omitted.

The pipe connector of the seventh embodiment shown in FIGS. 18 to 20 has a construction similar to that of the sixth embodiment shown in FIGS. 15 to 17, except that it includes a packing receiving recess 160 provided at the spacer portion 140d integrally formed on the inner surface of the second pipe member 140 and adapted to receive a packing member 190.

For coupling the pipe 110 to the pipe connector having the above-mentioned construction, the clamp member 120 is threadedly coupled to the second pipe member 140 of nipple 200 under a condition the inner end of the pipe 110 is inserted into the annular space defined between the spacer portion 140d of the second pipe member 140 and the inner pipe portion 150, after the packing member 190 has been inserted into the packing receiving recess 160 formed on the inner surface of the second pipe member 140. As the clamp member 120 is tightened, the spacer portion 140d integrally formed at the outer end of the second pipe member 140 together with the annular groove 140c is pressed toward the center line of the pipe 110 by the inclined surface 120c of the clamp member 120, so that the packing member 190 can be in tight contact with the outer surface of pipe 110. As a result, the pipe 110 can be tightly coupled to the nipple 200 without causing any leakage of a gas or liquid flowing through the pipe 110.

Referring to FIGS. 21 and 22, there is illustrated a pipe connector in accordance with an eighth embodiment of the present invention. In FIGS. 21 and 22, elements corresponding to those of the sixth embodiment are denoted by the same reference numerals and, thus, their detailed description will be omitted.

The pipe connector of the eighth embodiment shown in FIGS. 21 and 22 has a construction similar to that of the sixth embodiment shown in FIGS. 15 to 17, except that it includes a packing receiving channel 193 provided at the spacer portion 140d integrally formed on the inner surface of the second pipe member 140 and adapted to receive a packing member 191 made of natural rubber, teflon or synthetic rubber.

For coupling the pipe 110 to the pipe connector having the above-mentioned construction, the clamp member 120 is threadedly coupled to the second pipe member 140 of nipple 200 under a condition the inner end of the pipe 110 is inserted through the through hole 122 of the clamp member 120 into the annular space defined between the spacer portion 140d of the second pipe member 140 and the inner pipe portion 150, after the packing member 191 has been inserted into the packing receiving channel 193 formed on the inner surface of the second pipe member 140. As the clamp member 120 is tightened, the spacer portion 140d integrally formed at the outer end of the second pipe member 140 together with the annular groove 140c is pressed toward the center line of the pipe 110 by the inclined surface 120c of the clamp member 120, so that the packing member 191 can be in tight contact with the outer surface of pipe 110. As a result, the pipe 110 can be tightly coupled to the nipple 200 without causing any leakage of a gas or liquid flowing through the pipe 110.

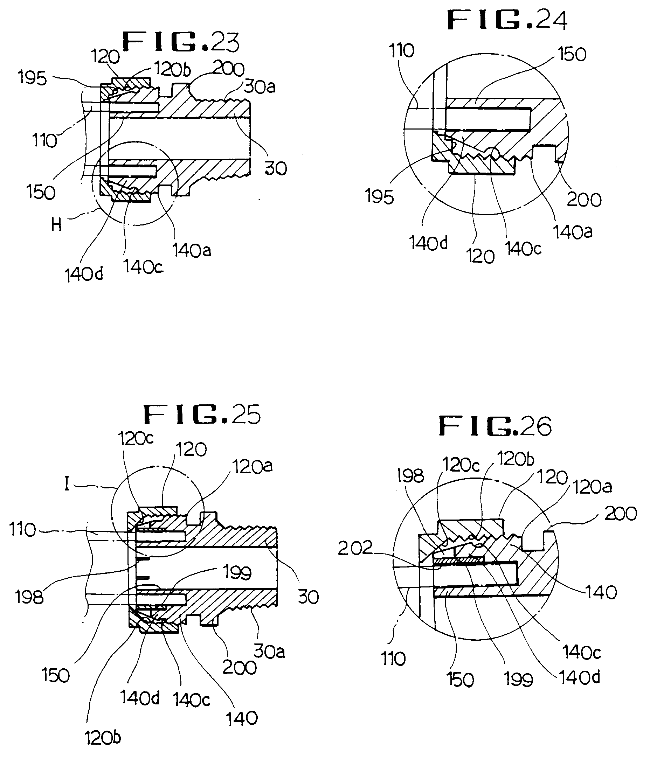

Referring to FIGS. 23 and 24, there is illustrated a pipe connector in accordance with a ninth embodiment of the present invention. In FIGS. 23 and 24, elements corresponding to those of the sixth embodiment are denoted by the same reference numerals and, thus, their detailed description will be omitted.

The pipe connector of the ninth embodiment shown in FIGS. 23 and 24 has a construction similar to that of the sixth embodiment shown in FIGS. 15 to 17, except that a step 195 is formed on the inner surface of the clamp member 120, in place of the inclined surface 120c.

For coupling the pipe 110 to the pipe connector having the above-mentioned construction including the step 195 formed on the inner surface of the clamp member 120, the clamp member 120 is threadedly coupled to the second pipe member 140 of nipple 200 under a condition the inner end of the pipe 110 is inserted through the through hole 122 of the clamp member 120 into the annular space defined between the spacer portion 140d of the second pipe member 140 and the inner pipe portion 150. As the clamp member 120 is tightened, the step 195 serves to more greatly press the spacer portion 140d of the second pipe member 140 against the outer surface of pipe 110 toward the center line of the pipe 110. As a result, the pipe 110 can be in tight contact with the inner surface of the second pipe member 140.

Referring to FIGS. 25 and 26, there is illustrated a pipe connector in accordance with a tenth embodiment of the present invention. In FIGS. 25 and 26, elements corresponding to those of the sixth embodiment are denoted by the same reference numerals and, thus, their detailed description will be omitted.

The pipe connector of the tenth embodiment shown in FIGS. 25 and 26 has a construction similar to that of the sixth embodiment, except that it includes a packing receiving channel 202 formed on the inner surface of the second pipe member 140 and adapted to receive a packing member 199 made of natural rubber, teflon or synthetic rubber, and a plurality of uniformly spaced slits 198 provided at the spacer portion 140d formed at the outer end of the second pipe member 140.

For coupling the pipe 110 to the pipe connector having the above-mentioned construction, the clamp member 120 is threadedly coupled to the second pipe member 140 of nipple 200 under a condition the inner end of the pipe 110 is inserted through the throughout hole 122 of the clamp member 120 into the annular space defined between the spacer portion 140d of the second pipe member 140 and the inner pipe portion 150. As the clamp member 120 is tightened, the spacer portion 140d integrally formed at the outer end of the second pipe member 140 together with the annular groove 140c is pressed toward the center line of the pipe 110 by the inclined surface 120c of the clamp member 120, so that the packing member 199 can be in tight contact with the outer surface of pipe 110. Since the spacer portion 40d has a plurality of uniformly spaced slits 198 extending in the longitudinal direction of the nipple 200, the pipe 110 and the packing member 199 can be more in tight contact with each other. As a result, the pipe 110 can be tightly coupled to the nipple 200 without causing any leakage of a gas or liquid flowing through the pipe 110.

Having described specific preferred embodiments of the invention with reference to the accompanying drawings, it is to be understood that the invention is not limited to those precise embodiments, and that various changes and modifications may be effected therein by one skilled in the art without departing from the scope or spirit of the invention as defined in the appended claims.

## Claims

1. A pipe connector comprising:
a nipple including a first pipe member having an outer surface formed with a threaded portion and a second pipe member having an outer surface formed with a threaded portion, said second pipe member being adapted to receive one end of a pipe to be coupled to the nipple;
a clamp member adapted to be threadedly coupled to the second pipe member, said clamp member having an inclined surface formed on an inner surface of the clamp member and a through hole for allowing the one end of the pipe to have access to the second pipe member;
a flange formed on an inner surface of the second pipe member and adapted to come into contact with said one end of the pipe inserted through said throughout hole of the clamp member into said nipple;
a spacer extending from an outer end of the second pipe member in a longitudinal direction of the second pipe member, said spacer being adapted to be pressed against an outer surface of the pipe toward a center line of the pipe by said inclined surface of the clamp member when the clamp member is fastened under a condition that the one end of the pipe received in the second pipe member has come into contact with said flange, whereby the pipe is partially depressed by the spacer; and
an annular groove formed at a juncture between said outer end of the second pipe member and the spacer and adapted to cause the spacer to be easily bent toward the center line of the pipe when the spacer is pressed by the inclined surface of the clamp member.

2. A pipe connector in accordance with claim 1, wherein said clamp member has a step formed on said inner surface of the clamp member and adapted to press said spacer against said outer surface of the pipe toward the center line of the pipe when the clamp member is fastened.

3. A pipe connector in accordance with claim 1, wherein said spacer has a plurality of uniformly spaced slits extending in a longitudinal direction of the spacer and a packing receiving channel formed on an inner surface of the spacer and adapted to receive a packing member.

4. A pipe connector in accordance with claim 1, wherein said spacer has a packing receiving recess formed on an inner surface of the space and adapted to receive a packing member.

5. A pipe connector in accordance with claim 1, wherein said spacer has a packing receiving recess formed on an inner surface of the spacer and adapted to receive a packing member.

6. A pipe connector comprising:
a nipple including a first pipe member having an outer surface formed with a threaded portion and a second pipe member having an outer surface formed with a threaded portion, said second pipe member being adapted to receive one end of a pipe to be coupled to the nipple;
a clamp member adapted to be threadedly coupled to the second pipe member, said clamp member having an inclined surface formed on an inner surface of the clamp member and a through hole for allowing said one end of the pipe to have access to the second pipe member;
an inner pipe member formed radially inwardly of the second pipe member to extend in a longitudinal direction of the second pipe member;
an annular space defined between the second pipe member and the inner pipe member and adapted to receive the one end of the pipe;
a spacer extending from an outer end of the second pipe member in a longitudinal direction of the second pipe member, said spacer being adapted to be pressed against an outer surface of the pipe toward a center line of the pipe by said inclined surface of the clamp member when the clamp member is fastened under a condition that the one end of the pipe has been received in said annular space, whereby the pipe is partially depressed by the spacer;
a first annular groove formed at a juncture between said outer end of the second pipe member and the spacer and adapted to cause the spacer to be easily bent toward the center line of the pipe when the spacer is pressed by the inclined surface of the clamp member; and
a second annular groove formed on an outer surface of the inner pipe member and adapted to receive said depressed portion of the pipe.

7. A pipe connector in accordance with claim 6, wherein said clamp member has a step formed on said inner surface of the clamp member and adapted to press said spacer against said outer surface of the pipe toward the center line of the pipe when the clamp member is fastened.

8. A pipe connector in accordance with claim 6, wherein said spacer has a plurality of uniformly spaced slits extending in a longitudinal direction of the spacer and a packing receiving channel formed on an inner surface of the spacer and adapted to receive a packing member.

9. A pipe connector in accordance with claim 6, wherein said spacer has a packing receiving recess formed on an inner surface of the space and adapted to receive a packing member.

10. A pipe connector in accordance with claim 6, wherein said spacer has a packing receiving recess formed on an inner surface of the spacer and adapted to receive a packing member.
